# EUROPEAN PATENT SPECIFICATION

(11) **EP 0 331 742 B1**
(45) Date of publication and mention of the grant of the patent: **01.06.1994**
(21) Application number: 88907372.2
(22) Date of filing: 22.08.1988
(51) Int. Cl.: D06H 7/22

(54) **METHOD FOR MACHINING BY CUTTING OR PUNCHING HIGH-MODULUS POLYETHYLENE**
SCHNEID- ODER STANZVERFAHREN VON POLYETHYLEN MIT HOHEM ELASTIZITÄTSMODUL
PROCEDE DE COUPE OU POINCONAGE DE POLYETHYLENE A MODULE D'ELASTICITE ELEVE

(30) Priority: 29.08.1987 JP 216174/87
(43) Date of publication of application: 13.09.1989
(73) Proprietor: SONY CORPORATION, Tokyo 141 (JP); MITSUI PETROCHEMICAL INDUSTRIES, LTD., Tokyo 100 (JP)
(72) Inventor: URYU, Masaru, Shinagawa-ku Tokyo 141 (JP); NISHI, Yoshio, Shinagawa-ku Tokyo 141 (JP); YAGI, Kazuo, Ootake-shi Hiroshima-ken 739-06 (JP)
(74) Representative: Thomas, Christopher Hugo
(86) International application number: JP8800835
(87) International publication number: WO8902004

(56) References cited:
- US-A- 3 619 444
- US-A- 3 629 381
- US-A- 4 182 017

## Description

The invention relates to a method for machining by cutting or punching high elastic modulus polyethylene.

Patent Specification USA 3 619 444 discloses an operation in which biaxially orientated plastics sheet, which may for example be polyethylene, is vacuum moulded in a mould to form a flanged container and, while still in the mould, the container is severed from the sheet, using a hot knife so that the peripheral portion of the flange is stress relieved and shrinks inwardly to form a thickened outer section, i.e. bead, on the flange.

Acoustic material employed in the diaphragms of a speaker is required to have a low density, a high modulus of elasticity and large internal losses, to enhance the reproduction frequency range. With this in view, evolution towards industrial application of the so-called composite diaphragm are now underway using a variety of fibres such as carbon-, aramide- or glass fibres as the reinforcing materials.

Ultrahigh molecular weight polyethylene, prepared by a crystal surface growth method, a gel spinning-ultradrawing method or a melt draw orientation method can be suitable as acoustic material, in that it has a lower density and a higher rate of propagation of longitudinal waves. For example Japanese Patent Publication KOKAI No. 182994/1983 proposes using polyethylene fibres having a rate of propagation of longitudinal waves not lower than 4000 m/sec as acoustic material.

However, high elastic modulus material, such as carbon or aramide fibres and the conjugate materials can be machined only with difficulty because of the larger modulus of elasticity and considerable labour or processing using a special machine is required to cut the material. This applies to both polyethylene fibres having a high modulus of elasticity or a high elastic modulus polyethylene and it can be subjected to secondary machining, such as cutting or punching only with considerable difficulty, because of the high modulus of elasticity.

It is, for example, almost impossible to cut the high elastic modulus polyethylene with ordinary scissors and although it can just about be cut with ceramic scissors it is difficult to ensure high dimensional accuracy and burrs are necessarily formed along the cutting edges.

According to the invention there is provided a method of machining by cutting or punching polyethylene or a composite material thereof, characterised in that the polyethylene or a composite material thereof is drawn high elastic modulus polyethylene or a composite material thereof and the method comprises heating the drawn high elastic modulus polyethylene or a composite material thereof to a temperature at least as high as the melting point of crystaline fibrils of the drawn high elastic modulus polyethylene to convert portions of the high elastic modulus polyethylene to be cut into low elastic modulus polyethylene, and machining by cutting or punching the portion thereof that was heated.

By the method of the invention, high elastic modulus polyethylene can be easily cut or punched with high dimensional accuracy and without forming burrs.

Thus the thermal properties of high elastic modulus polyethylene fibres may be utilized to lower the modulus of elasticity locally to make possible normal machining.

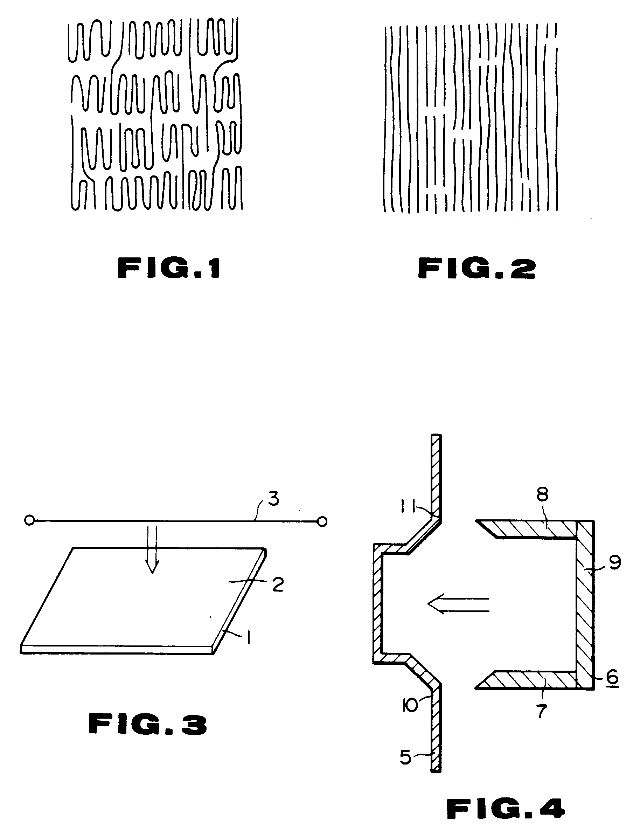

High elastic modulus polyethylene, to be cut by the method of the invention, can be prepared by ultra-drawing, such as heat- or zone drawing, solid state extrusion or gel spinning. When subjected to ultra-drawing, polyethylene is turned from a state of a mixture of lamellar crystals and amorphous crystals shown in Figure 1 of the accompanying drawing into fibrillated crystals composed of fully extended chains, as shown in Figure 2, thus presenting extremely high modulus and mechanical strength.

Such high elastic modulus polyethylene may be formed of sheets or a woven fabric composed of a large number of polyethylene fibres.

The invention is also applicable to a composite or conjugate material of high elastic modulus polyethylene. Such a material can be formed for example as an epoxy resin composite material, using the above described high elastic modulus polyethylene fibres or a woven fabric prepared therefrom as the reinforcing material.

When machining such high elastic modulus polyethylene fibres, or the composite material thereof, the portion to be machined is heated to a temperature higher than the melting point of the crystaline fibrils and the machining operation, such as cutting or punching, is performed along the heated portion.

The heating temperature of the machined portion need only be higher than the melting point of the crystaline fibrils constituting the aforementioned high elastic modulus polyethylene and hence may be set so as to be not lower than 152°C. Since the melting point of the crystaline fibrils is constant regardless of the magnitude of the modulus of elasticity of the high elastic modulus polyethylene, this temperature of 152°C represents the lower limit temperature. A temperature not lower than 200°C is most favourable since only a short heating time can then suffice and the cutting may even be accomplished by a member which effected the heating. Although there is no upper limit temperature, it is not advisable to use an excessively high temperature due to economical considerations.

Thus, for machining, the material is heated to a temperature not lower than the melting point of the crystaline fibrils, after which the heated portion is machined. However, the heating and machining can if desired be performed simultaneously. In this case, it only suffices to heat a cutter or drill blades by some suitable means.

The modulus of elasticity of high elastic modulus polyethylene may be obtained in general by ultra-drawing polyethylene and orienting crystaline fibrils unidirectionally as shown in Figure 2.

When measured with a differential scanning calorimeter (DSC), the melting point of the crystaline fibrils is in the vicinity of 152°C. Therefore, when a temperature of not lower than 152°C is applied to high elastic modulus polyethylene, the crystaline fibrils are melted and disoriented so that the modulus of elasticity is lowered and the material is turned back into ordinary polyethylene (a mixture of lamellar crystals and amorphous crystals) as shown in Figure 1. This state is not changed even when the heated polyethylene cools to room temperature.

The thermal properties of polyethylene are utilized in that the portion to be machined is heated to higher than the melting point (152°C) of the crystaline fibrils and thereby turned into low elastic modulus polyethylene that may be machined more easily and the portion is subjected to secondary machining such as cutting or punching.

Dimensional accuracy can be improved at the time of cutting, and it becomes possible to prevent the generation of burrs or cracks.

The invention is diagrammatically illustrated by way of example in the accompanying drawing, in which:-
Figure 1 is a diagrammatic view showing the crystalline state of polyethylene preceding ultra-drawing;
Figure 2 is a diagrammatic view showing the crystalline state of polyethylene after ultra-drawing;
Figure 3 is a diagrammatic perspective view showing a heating process by an electrical heating wire for a high elastic modulus polyethylene woven fabric; and
Figure 4 is a diagrammatic sectional view showing a cutting process for the high elastic modulus polyethylene composite material by shearing.

The invention will be explained on the basis of test results.

### Example 1

There was a requirement to cut high elastic modulus polyethylene fibres.

A woven fabric 1 was prepared from high elastic modulus polyethylene fibres (modulus of elasticity, 90 GPa), and an electrical heating wire 3, heated to higher than 152°C, was applied to a cut portion 2 of the fabric 1 to heat it. The portion was cut using scissors after it had cooled.

The cutting operation was facilitated and the cutting portion was welded and presented no burrs, while favourable results were also obtained as to machining accuracy.

When the electrical wire 3 was heated to at least 200°C, it was possible to cut the fabric 1 using only the wire 3.

Conversely, when an attempt was made to cut the portion 2 without taking any previous measures, cutting was not possible. An attempt was also made to cut the portion 2 with ceramic scissors without taking any preliminary measures. The portion 2 could just about be cut, but the dimensional accuracy was rather low and burrs were formed along the cutting edge.

### EXAMPLE 2

An attempt was made to cut a composite material containing high elastic modulus polyethylene fibres as a reinforcing material.

First, an epoxy resin composite or conjugate material, 500 microns thick, containing a woven fabric of high elastic modulus polyethylene fibres as a reinforcing material, was prepared.

The portion to be cut of this composite material was heated to not lower than 152°C by an electric heating wire, as in Example 1 and then cut by shearing.

The cutting results were favourable with no formation of burrs or cracks.

Conversely, when the portion to be cut of the composite material of the aforementioned high elastic modulus polyethylene was cut by shearing without taking any preliminary measures, numerous cracks and burrs were formed.

### EXAMPLE 3

An attempt was made to heat and cut a composite material similar to that of Example 2 simultaneously.

As shown in Figure 4, a heater 9 was mounted in the vicinity of a mounting portion of cutting blades 7 and 8 of a shearer 6, the cutting blades 7 and 8 were heated to about 200°C to cut the cutting portions 10 and 11 of the composite material 5. The material was then machined to a loudspeaker diaphragm. Favourable results could be obtained without formation of burrs or cracks, as in Example 2.

## Claims

1. A method of machining by cutting or punching polyethylene or a composite material thereof, characterised in that the polyethylene or a composite material thereof is drawn high elastic modulus polyethylene or a composite material thereof and the method comprises heating the drawn high elastic modulus polyethylene or a composite material thereof to a temperature at least as high as the melting point of crystaline fibrils of the drawn high elastic modulus polyethylene to convert portions of the high elastic modulus polyethylene to be cut into low elastic modulus polyethylene, and machining by cutting or punching the portion thereof that was heated.

2. A method according to claim 1, wherein prior to said heating step the crystaline fibrils of the drawn high elastic modulus polyethylene are oriented unidirectionally.

3. A method according to claim 1, wherein prior to said heating step the drawn high elastic modulus polyethylene has been superdrawn by heat-, zone-, solid extrusion- or gel spinning.

4. A method according to any one of claims 1 to 3, wherein the heating temperature is not lower than 152°C.

5. A method according to any one of claims 1 to 4, wherein the heating and the machining by cutting or punching are carried out simultaneously.

## Patentansprüche

1. Verfahren zur Bearbeitung von Polyethylen oder eines daraus zusammengesetzten Materials durch Schneiden und/oder Stanzen,
**dadurch gekennzeichnet,**
daß das Polyethylen oder das daraus zusammengesetzte Material gezogenes Polyethylen mit hohem Elastizitätsmodul oder ein daraus zusammengesetztes Material ist, und daß das Verfahren das Erwärmen des gezogenen Polyethylens mit hohem Elastizitätsmodul oder des daraus zusammengesetzten Materials auf eine Temperatur, die wenigstens so hoch wie der Schmelzpunkt kristalliner Fasern des gezogenen Polyethylens mit hohem Elastizitätsmodul ist, um zumindest einen Teil des zu bearbeitenden gezogenen Polyethylens mit hohem Elastizitätsmodul in Polyethylen mit niedrigem Elastizitätsmodul umzuwandeln, und Bearbeiten durch Schneiden und/oder Stanzen des Teils umfaßt, der erwärmt worden ist.

2. Verfahren nach Anspruch 1, wobei die kristallinen Fasern des gezogenen Polyethylens mit hohem Elastizitätsmodul vor dem Schritt des Erwärmens unidirektional erwärmt werden.

3. Verfahren nach Anspruch 1, wobei das gezogene Polyethylen mit hohem Elastizitätsmodul vor dem Schritt des Erwärmens durch Warm-, Zonen-, Festpreß- und/oder Gelspinnen überzogen worden ist.

4. Verfahren nach einem der Ansprüche 1 bis 3, wobei die Erwärmungstemperatur nicht niedriger als 152 °C ist.

5. Verfahren nach einem der Ansprüche 1 bis 4, wobei die Erwärmung und die Bearbeitung durch Schneiden und/oder Stanzen gleichzeitig ausgeführt werden.

## Revendications

1. Procédé d'usinage par coupe ou par poinçonnage d'un polyéthylène ou d'une matière composite à base de celui-ci, caractérisé en ce que le polyéthylène ou une matière composite à base de celui-ci est du polyéthylène à module d'élasticité élevé étiré ou une matière composite à base de celui-ci et le procédé comprend le chauffage du polyéthylène à module d'élasticité élevé étiré ou une matière composite à base de celui-ci à une température au moins aussi élevée que le point de fusion des fibrilles cristallines du polyéthylène étiré à module d'élasticité élevé pour convertir des parties du polyéthylène à module d'élasticité élevé à couper, en polyéthylène à module d'élasticité bas, et l'usinage par coupe ou poinçonnage de la partie de celui-ci qui été chauffée.

2. Procédé selon la revendication 1, dans lequel avant ladite étape de chauffage les fibrilles cristallines du polyéthylène étiré à module d'élasticité élevé sont orientées unidirectionnellement.

3. Procédé selon la revendication 1, dans lequel avant ladite étape de chauffage le polyéthylène étiré à module d'élasticité élevé a été super-étiré par filage à chaud, filage de zone, filage à la presse de barres pleines ou filage de gel.

4. Procédé selon l'une quelconque des revendications 1 à 3, dans lequel la température de chauffage n'est pas inférieure à 152°C.

5. Procédé selon l'une quelconque des revendications 1 à 4, dans lequel le chauffage et l'usinage par coupe ou poinçonnage sont réalisés en même temps.
